**Europäisches Patentamt**

**European Patent Office**

**Office européen des brevets**

(19)

(11) **EP 0 790 550 B1**

(12) **EUROPÄISCHE PATENTSCHRIFT**

(45) Veröffentlichungstag und Bekanntmachung des Hinweises auf die Patenterteilung:
**12.02.2003 Patentblatt 2003/07**

(51) Int Cl.$^7$: **G06F 7/00**

(21) Anmeldenummer: **97102298.3**

(22) Anmeldetag: **13.02.1997**

(54) **Anordnung zur Fuzzifizierung eines an einem Eingang anliegenden Eingangssignales, das als scharfer Eingangswert oder als unscharfe Menge von Eingangswerten vorliegt**

Device for fuzzifying an input signal, which is available as a crisp input value or as a fuzzy set of input values

Dispositif de fuzzification d'un signal d'entrée, qui est disponible comme une valeur nette ou comme un ensemble flou de valeurs d'entrée

(84) Benannte Vertragsstaaten:
**DE FR GB IT**

(30) Priorität: **15.02.1996 DE 19605667**

(43) Veröffentlichungstag der Anmeldung:
**20.08.1997 Patentblatt 1997/34**

(73) Patentinhaber: **Infineon Technologies AG 81669 München (DE)**

(72) Erfinder: **Eichfeld, Herbert, Dr. 80538 München (DE)**

(74) Vertreter: **Jannig, Peter, Dipl.-Ing. et al Jannig & Repkow, Patentanwälte, Klausenberg 20 86199 Augsburg (DE)**

(56) Entgegenhaltungen:
**EP-A- 0 684 549       WO-A-95/08797
DE-A- 4 409 169**

- **COMPUTER, Bd. 25, Nr. 5, 1.Mai 1992, Seiten 67-71, XP000304342 TZI-CKER CHIUEH: "OPTIMIZATION OF FUZZY LOGIC INFERENCE ARCHITECTURE"**
- **IEEE JOURNAL OF SOLID-STATE CIRCUITS, Bd. 25, Nr. 2, 1.April 1990, Seiten 376-382, XP000116676 HIROYUKI WATANABE ET AL: "A VLSI FUZZY LOGIC CONTROLLER WITH RECONFIGURABLE, CASCADABLE ARCHITECTURE"**

**Beschreibung**

Anordnung zur Fuzzifizierung eines an einem Eingang anliegenden Eingangssignales, das als scharfer Eingangswert oder als unscharfe Menge von Eingangswerten vorliegt.

Der Aufbau und die Arbeitsweise von Fuzzy-Prozessoren sind bekannt IEEE JOURNAL OF SOLID-STATE CIRCUITS, Bd.25, Nr. 2, 1. April 1990, Seiten 376-382, HIROYUKI WATANABE ET AL: " A VLSI FUZEY LOGIC CONTROLLER WITH RECONFIGURABLE, CASCADABLE ARCHITECTURE". Ein solcher Fuzzy-Prozessor enthält auch eine. Anordnung zur Fuzzifizierung von Eingangssignalen, im folgenden Fuzzyschaltung genannt, deren Aufgabe darin besteht, für ein digitales Eingangssignal, das fuzzifiziert werden soll, mit Hilfe von in einem Speicher - auch Knowledge-Base-Memory genannt - gespeicherten Eingangszugehörigkeitsfunktionen die Zugehörigkeitswerte zu ermitteln. Dazu muß zunächst festgestellt werden, welche Eingangszugehörigkeitsfunktionen (im folgenden Zugehörigkeitsfunktion genannt) vom Eingangssignal getroffen werden. Anschließend können dann die dem Eingangssignal zuzuordnenden Zugehörigkeitswerte aus dem Speicher geholt werden.

Die Zugehörigkeitsfunktionen können punktweise abgespeichert sein. Unter der Voraussetzung, daß das Eingangssignal mit 8 Bit aufgelöst ist, werden die Zugehörigkeitsfunktionen punktweise mit 256 Punkten abgespeichert. Dies hat die Vorteile, daß die Berechnung der Zugehörigkeitswerte durch einen Speicherzugriff (Abtastverfahren) erfolgt. Neben dem Abtastverfahren gibt es noch weitere Verfahren zur Fuzzifizierung, nämlich das Zoom-Verfahren (P4409362.4 DE) und das Verfahren der Elementarintervalle (P 4415135.7 DE). Diese weiteren Verfahren sind insbesondere für Auflösungen des Eingangssignales > 8 Bit geeignet.

Bekannte Fuzzyschaltungen arbeiten mit scharfen Eingangswerten, d. h. Meßwerten oder aus Meßwerten abgeleitete Größen, die einen exakten Wert haben. Es gibt jedoch auch Anwendungsfälle, bei denen das Eingangssignal nicht aus einem scharfen Wert besteht, sondern aus einer unscharfen Menge von Eingangswerten. Beispiele sind Meßungenauigkeiten des Eingangssignales oder die Verteilung des Meßwertes eines Sensor-Arrays.

Die der Erfindung zugrundeliegende Aufgabe besteht darin, eine Fuzzyschaltung eines an einem Eingang anliegenden Eingangssignales anzugeben, die neben scharfen Eingangswerten auch eine unscharfe Menge von Eingangswerten verarbeiten kann. Diese Aufgabe wird gemäß den Merkmalen des Anspruchs 1 gelöst. Ein Verfahren, nach dem eine unscharfe Menge von Eingangswerten verarbeitet werden kann, ergibt sich aus Anspruch 4.

Bei der Erfindung wird die Schnittmenge der Zugehörigkeitswerte der getroffenen Zugehörigkeitsfunktionen mit der unscharfen Menge der Eingangswerte gebildet und zwar für alle Zugehörigkeitsfunktionen. Für jede der Schnittmengen werden die Höhenpunkte berechnet und nur diese weiterverarbeitet.

Die Ermittlung der Höhenpunkte erfolgt mit Hilfe von Registern, wobei jeder Zugehörigkeitsfunktion ein Register zugeordnet wird. Für jeden Eingangswert des Eingangssignales wird die von diesem Wert getroffene Zugehörigkeitsfunktion ermittelt und über die Nummer der getroffenen Zugehörigkeitsfunktion das zugeordnete Register angesteuert und zudem der Zugehörigkeitswert erzeugt. Der Eingangswert und der zugeordnete Zugehörigkeitswert wird miteinander verglichen und der minimale Wert ausgewählt. Aus diesen minimalen Werten, die für alle Eingangswerte und die zugeordneten Zugehörigkeitswerte der getroffenen Zugehörigkeitsfunktion ermittelt worden sind, wird der Maximalwert festgestellt und als Höhenpunkt am Ausgang der Fuzzyschaltung abgegeben.

Weiterbildungen der Erfindung ergeben sich aus den abhängigen Ansprüchen.

Anhand eines Ausführungsbeispieles, das in den Figuren dargestellt ist, wird die Erfindung weiter erläutert. Es zeigen

Fig. 1 ein Blockschaltbild einer Fuzzyverarbeitungseinheit,

Fig. 2 eine Fuzzyschaltung zur Fuzzifizierung der unscharfen Menge der Eingangswerte,

Fig. 3 ein Diagramm, in dem Zugehörigkeitsfunktionen und die unscharfe Menge der Eingangswerte dargestellt sind.

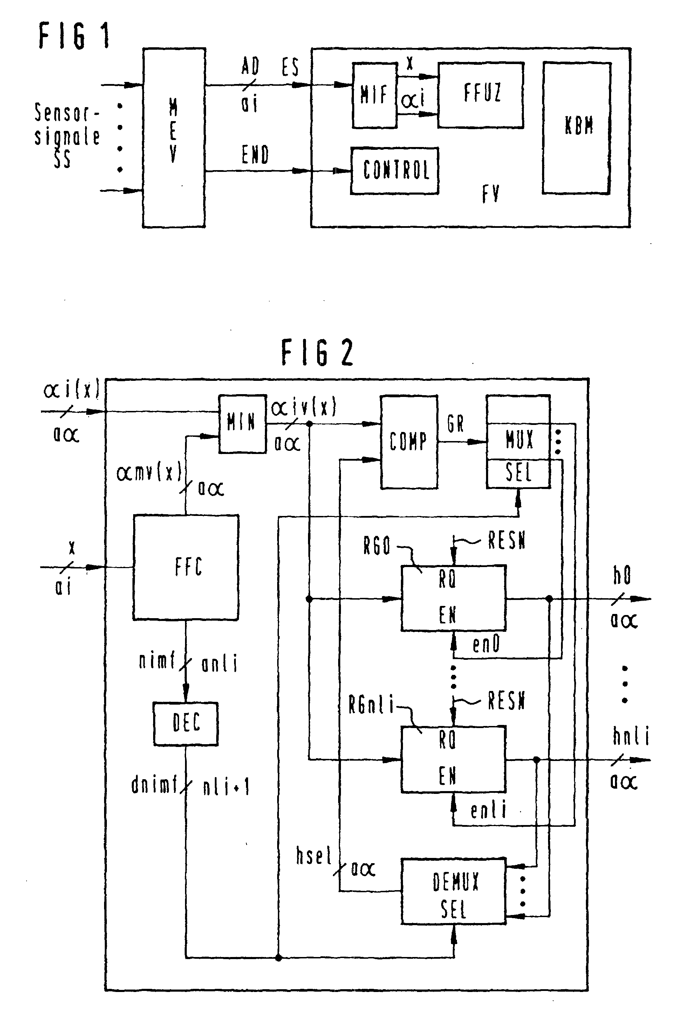

Figur 1 zeigt ein Blockschaltbild, das eine Fuzzyverarbeitungseinheit FV enthält, die am Eingang anliegende Eingangssignale ES verarbeitet. Dabei wird davon ausgegangen, daß das jeweilige Eingangssignal neben scharfen Eingangswerten auch eine unscharfe Menge von Eingangswerten aufweisen kann. Der scharfe Eingangswert wird mit x bezeichnet, die unscharfe Menge von Eingangswerten mit $\alpha i(x)$, wobei i auf den jeweiligen Eingang der Fuzzyverarbeitungseinheit hinweist. Die unscharfe Menge $\alpha i(x)$ drückt zum Beispiel die Meßungenauigkeit des Eingangswertes x aus oder die Verteilung der Meßwerte eines Sensor-Arrays. Die Aufgabe der Fuzzyschaltung besteht nun darin, zunächst die Schnittmengen $\alpha i\nu$ zwischen $\alpha i(x)$ und $\alpha m\nu(x)$ mit $0<\nu<nli$ zu bilden, wobei $\alpha m$ der Zugehörigkeitswert der getroffenen Funktion ist, $\nu$ die Nummer der Zugehörigkeitsfunktion angibt und nli die Anzahl der Zugehörigkeitsfunktionen pro Eingang symbolisiert. Nimmt man wie üblich an, daß die Bedingungen einer Wenn-Dann-Regel mit AND verknüpft sind und interpretiert man das AND als Minimumfunktion, dann müssen für jede der Schnittmengen $\alpha i\nu$ die Höhenpunkte $hi\nu$ berechnet werden, da nur diese Höhenpunkte weiterverarbeitet werden. Für die Fuzzifikation eines ersten Fuzzyeingangs (i=1) $\alpha 1(x)$ ist also zu berechnen:

h10=hgt($\alpha$10)=hgt(min($\alpha$1(x),$\alpha$m0(x))),

h1nli=hgt($\alpha$1nli)=hgt(min(a1(x),$\alpha$mnli(x))).

Für jeden Fuzzy-Eingang sind diese nli-Operationen auszuführen.

Im Ausführungsbeispiel der Figur 1 werden als unscharfe Menge von Eingangswerten Sensorsignale SS einer Einheit zur Meßwerterfassung und Vorverarbeitung MEV zugeführt, diese mißt die Sensorsignale SS, wandelt sie in scharfe oder unscharfe Eingangswerte $\alpha$i(x) um und sendet diese über einen Adressdatenbus AD an die Fuzzverarbeitungseinheit FV, wobei die Leitungszahl des Adreßdatenbusses AD der größten Auflösung ai der Eingänge entspricht.

Bei der Informationsübertragung von der Einheit MEV zur Fuzzyverarbeitungseinheit FV wird stets zunächst die x-Koordinate und dann der zugehörige Funktionswert $\alpha$i(x) gesendet. Das zur Einheit MEV angeordnete Interface MIF der Fuzzyverarbeitungseinheit FV sendet diese Informationen getrennt nach x und $\alpha$i(x) an die Fuzzyschaltung FFUZ.

Die letzte x-Koordinate der unscharfen Menge eines Fuzzy-Eingangs wird mit einem Endesignal der Ablaufsteuerung-Control- mitgeteilt. Die Reihenfolge der x-Koordinaten ist beliebig. Es werden jedoch nur solche übertragen, deren Funktionswert > 0 ist. Damit ergibt sich die Rechenzeit TFUZ für die Fuzzifikation eines Eingangs zu:

$$TFUZ \leq n\alpha iTFFUZ$$

TFFUZ ist die Verarbeitungszeit der Fuzzyschaltung FFUZ für ein Wertepaar (x,$\alpha$i(x)), n$\alpha$i ist die Anzahl der x-Koordinaten eines Fuzzy-Eingangs mit $\alpha$i(x) > 0. Es gilt

0<n$\alpha$i$\leq$ ai (Für einen scharfen Eingang x0 gilt n$\alpha$i=1 und $\alpha$i(x0)=1)

Aus Figur 1 ergibt sich neben der Fuzzyschaltungund dem Interface MIF noch der Speicher KBM, in dem die Zugehörigkeitsfunktionen gespeichert sind, und eine Steuerung Control bekannten Aufbaus. Die Erfindung selbst beschäftigt sich lediglich mit der Realisierung der Fuzzyschaltung FFUZ.

Die Fuzzyschaltung FFUZ (Figur 2) besteht aus einem Fuzzifier FFC bekannten Aufbaus, der scharfe Werte verarbeitet. Dem Fuzzifier FFC werden die Eingangswerte x zugeführt. Am Ausgang des Fuzzifiers FFC werden die Zugehörigkeitswerte $\alpha$m$\nu$(x) und die Nummer nimf der getroffenen Zugehörigkeitsfunktion gebildet. Einer Minimumschaltung MIN werden die Zugehörigkeitswerte $\alpha$m$\nu$(x) und die Eingangswerte des Eingangssignales $\alpha$i(x) zugeleitet. Diese wählt aus den beiden Werten $\alpha$m$\nu$(x) und $\alpha$i(x) den minimalen aus und leitet diesen Minimalwert $\alpha$i$\nu$(x) einer Vergleichsschaltung COMP zu. Die Vergleichsschaltung COMP vergleicht den Inhalt eines ausgewählten Registers RG mit dem Minimalwert $\alpha$i$\nu$(x). Jeder Zugehörigkeitsfunktion ZF ist dabei jeweils ein Register RG zugeordnet, im Ausführungsbeispiel bei nli Zugehörigkeitsfunktionen somit nli Register RG0-RGnli. Das jeweilige Register wird über die Nummer nimf der getroffenen Zugehörigkeitsfunktion ausgewählt, dazu wird nimf in einer Decoderschaltung DEC decodiert, der decodierte Wert wird einer Demultiplexer-Schaltung DEMUX zugeführt, über die die Ausgänge der Register RG mit der Vergleichsschaltung COMP verbindbar sind.

Zu Beginn der Fuzzifizierung werden alle Register RG auf 0 gesetzt. Wird durch einen Eingangswert eine Zugehörigkeitsfunktion getroffen, dann erzeugt der Fuzzifier FFC die Nummer nimf der getroffenen Zugehörigkeitsfunktion ZF und damit wird das Register festgelegt, das bei der weiteren Verarbeitung verwendet wird.

Zur Ermittlung des Maximalwertes oder des Höhenpunktes h werden somit die Minimalwerte $\alpha$i$\nu$(x) und der Inhalt des der getroffenen Zugehörigkeitsfunktion zugeordneten Registers in der Vergleichsschaltung miteinander verglichen. Stellt die Vergleichsschaltung COMP fest, daß der Inhalt des Registers kleiner ist als $\alpha$i$\nu$ dann wird $\alpha$i$\nu$ in das Register eingespeichert. Stellt die Vergleichsschaltung dagegen fest, daß der Inhalt des Registers größer ist als $\alpha$i$\nu$, dann bleibt der Inhalt des Registers erhalten. Diese Arbeitsweise wird mit Hilfe der Vergleichsschaltung COMP erreicht, die ein Signal GR abgibt, wenn $\alpha$i$\nu$ größer ist als der Inhalt des Registers. Das Signal GR wird dazu verwendet, um das entsprechende Register über den enable-Eingang anzusteuern. Die Auswahl des der jeweiligen getroffenen Zugehörigkeitsfunktion zugeordneten Registers erfolgt mit Hilfe des Multiplexers MUX, der ebenfalls von der Nummer der Zugehörigkeitsfunktion angesteuert wird. Die Register RG enthalten nach der Fuzzifizierung der unscharfen Menge der Eingangswerte für jede getroffene Zugehörigkeitsfunktion den Höhenpunkt h.

Die in der Figur 2 unterhalb der Leitungen bzw. rechts der Leitung angegebenen Bezeichnungen geben die Anzahl der jeweiligen Leitungen an.

Bei der in Figur 2 dargestellten Anordnung werden die Eingangswerte von x nacheinander bearbeitet. Es ist selbstverständlich auch möglich, eine parallele Ausführung der Fuzzyschaltung vorzusehen.

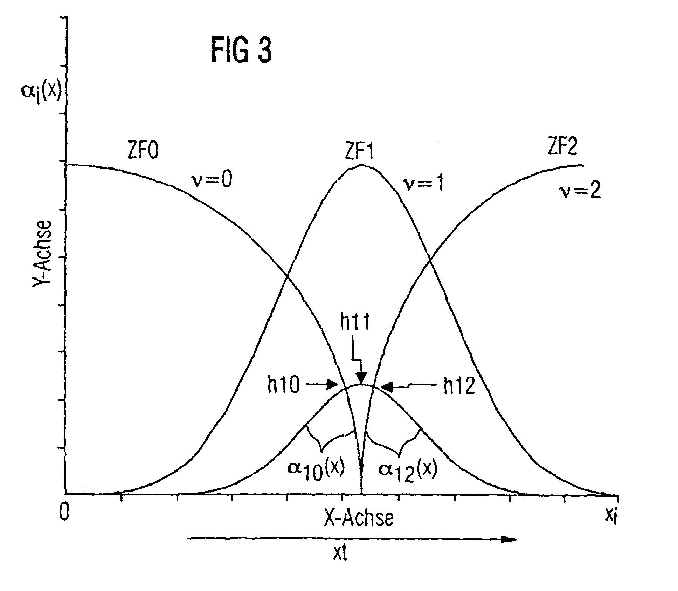

Figur 3 zeigt ein Diagramm, aus dem die Arbeitsweise der Fuzzyschaltung entnehmbar ist. Auf der x-Achse sind die Eingangssignale x, auf der y-Achse die Zugehörigkeitswerte $\alpha$m der Zugehörigkeitsfunktionen ZF0, ZF1, ZF2. Weiterhin ist die unscharfe Menge der Eingangswerte von x dargestellt, diese unscharfen Werte sind mit $\alpha$ benannt. Die x-Werte, oder die unscharfe Menge um den Eingangswert x ist mit xt bezeichnet. Es ist im Ausführungsbeispiel zu sehen, daß die unscharfe Menge der Eingangswerte xt drei verschiedene Zugehörigkeitsfunktionen trifft. Für jede der Zugehörigkeitsfunktionen muß der Höhenpunkt festgestellt werden. Zur Erläuterung wird die Zugehörigkeitsfunktion ZF0 herangezogen. Durch Vergleich der Zugehörigkeitswerte $\alpha m0(x)$ mit den Eingangswerten $\alpha 10(x)$ der unscharfen Menge von Eingangswerten xt kann der Höhenpunkt h10 bestimmt werden. Mit diesem Wert wird weitergearbeitet, dieser Wert wird nach Figur 2 im zugeordneten Register RG0 letztendlich gespeichert. Für jede der getroffenen Zugehörigkeitsfunktionen ZF1 und ZF2 werden auf dieselbe Weise die Höhenpunkten h11 und h12 bestimmt.

Die Anordnung nach Figur 2 kann nicht nur eine unscharfe Menge von Eingangswerten bearbeiten, sondern auch scharfe Eingangswerte.

Zur Vermeidung von Fehlern werden alle Wertepaare $(x,\alpha i(x))$ eines Eingangs i übertragen. Es genügt nicht, nur ausgewählte Stellen des Fuzzy-Eingangs zu übertragen, da die Verteilung der Zugehörigkeitsfunktionen ZF auf der x-Achse und ihre Form beliebig ist. Würde man nicht alle Stellen von $\alpha i$ übertragen, um Rechenzeit zu sparen, bestünde die Gefahr, eine Zugehörigkeitsfunktion zu übersehen; insbesondere bei schmalen Zugehörigkeitsfunktionen und breiten Fuzzy-Eingängen wäre die Wahrscheinlichkeit des Übersehens groß.

Wenn nach Figur 1 Ende=1 ist, ist die Fuzzifikation eines Eingangs beendet. Es liegen dann die Höhenpunkte h aller vom Eingangssignal getroffenen Zugehörigkeitsfunktionen zur weiteren Verarbeitung in den entsprechenden Registern RG. Bevor der nächste Eingang fuzzifiziert werden kann, müssen die Register RG wieder zurückgesetzt werden.

**Patentansprüche**

1. Anordnung zur Fuzzifizierung eines an einem Eingang anliegenden Eingangssignales, das als scharfer Eingangswert oder als unscharfe Menge von Eingangswerten vorliegt, wobei die unscharfe Menge von Eingangswerten durch mehrere Wertepaare gebildet wird, welche jeweils eine x-Koordinate (x) und einen zugehörigen Funktionswert ($\alpha i$(x)) umfassen,

   - wobei die Anordnung einen Fuzzifier (FFC) enthält, der ermittelt, welche Zugehörigkeitsfunktion (ZF) von der jeweiligen x-Koordinate (x) getroffen wird, und die Nummer (nimf) der Zugehörigkeitsfunktion und den Zugehörigkeitswert ($\alpha mv$(x)) erzeugt,
   - wobei die Anordnung eine Minimumschaltung (MIN) enthält, die aus jedem Funktionswert ($\alpha i$(x)) und dem der zugehörigen x-Koordinate (x) zugeordneten Zugehörigkeitswert ($\alpha mv$(x)) den Minimalwert ($\alpha iv$(x)) herausgreift,
   - wobei die Anordnung ein der Zugehörigkeitsfunktion (ZF) zugeordnetes Register (RG) enthält, in welchem der Minimal-wert ($\alpha iv$(x)) speicherbar ist, und
   - wobei die Anordnung eine Vergleichsschaltung (COMP) enthält, die aus dem Minimalwert ($\alpha iv$(x)) und dem im zugeordneten Register (RG) gespeicherten Wert den größeren auswählt und die Abspeicherung dieses größeren Wertes im Register (RG) veranlaßt, so daß nach der Auswertung aller Wertepaare der unscharfen Menge von Eingangswerten der das Ergebnis der Fuzzifizierung repräsentierende Maximalwert der Minimalwerte im Register (RG) gespeichert ist.

2. Anordnungen nach Anspruch 1, bei dem jeder Zugehörigkeitsfunktion (ZF) jeweils ein Register (RG) zugeordnet ist,
   bei dem die Auswahl eines Registers über die Nummer (nimf) der getroffenen Zugehörigkeitsfunktion erfolgt,
   bei dem ein Multiplexer (MUX) vorgesehen ist, der von der Nummer der Zugehörigkeitsfunktion so einstellbar ist, daß das der getroffenen Zugehörigkeitsfunktion zugeordnete Register angesteuert wird.

3. Anordnung nach Anspruch 1 oder 2, bei der der Ausgang des Fuzzifiers (FFC) für die Nummer (nimf) der getroffenen Zugehörigkeitsfunktion mit einem Demultiplexer (DEMUX) verbunden ist, der die Ausgänge der Register (RG) mit dem Eingang der Vergleichsschaltung (COMP) verbindet,
   bei der der andere Eingang der Vergleichsschaltung (COMP) mit dem Ausgang der Minimumschaltung (MIN) verbunden ist, wobei der Ausgang der Vergleichsschaltung am Multiplexer (MUX) anliegt.

4. Verfahren zur Fuzzifizierung eines an einer Fuzzyschaltung anliegenden Eingangssignales, das als scharfer Eingangswert oder als unscharfe Menge von Eingangswerten vorliegt, wobei die unscharfe Menge von Eingangswerten durch mehrere Wertepaare gebildet wird, welche jeweils eine x-Koordinate (x) und einen zugehörigen Funktionswert ($\alpha i$(x)) umfassen,

   - bei dem die Zugehörigkeitsfunktion (ZF) ermittelt wird, die von der jeweiligen x-Koordinate (x) getroffen wird, und die Nummer (nimf) der Zugehörigkeitsfunktion und der Zugehörigkeitswert ($\alpha mv$(x)) erzeugt wird,
   - bei dem aus jedem Funktionswert ($\alpha i$(x)) und dem der zugehörigen x-Koordinate (x) zugeordneten Zugehörigkeitswert ($\alpha mv$(x)) der Minimalwert ($\alpha iv$(x)) herausgegriffen wird,
   - bei dem aus den Minimalwerten ($\alpha iv$(x)) der Maximalwert ausgesucht wird,
   - und bei dem der Maximalwert am Ausgang abgegeben wird.

**5.** Verfahren nach Anspruch 4

bei dem jeder Zugehörigkeitsfunktion (ZF) ein Register (RG) zugeordnet wird, die zu Beginn jeweils auf 0 gesetzt werden,

bei dem die Ermittlung des Maximalwertes für jedes Eingangssignal seriell erfolgt,

bei dem der Minimalwert für eine getroffene Zugehörigkeitsfunktion mit dem im zugeordneten Register gespeicherten Wert verglichen wird und für den Fall, daß der Minimalwert größer ist als der Wert des Registers dieser in dem Register abgespeichert wird,

bei dem dies solange durchgeführt wird, bis alle Werte des Eingangssignales untersucht worden sind.

**Claims**

**1.** Arrangement for fuzzification of an input signal which is applied to an input and is in the form of a sharp input value or a fuzzy set of input values, with the fuzzy set of input values being formed by a number of value pairs which each comprise an x coordinate (x) and an associated function value ($\alpha_i(x)$),

- with the arrangement containing a fuzzifier (FFC) which determines which association function (ZF) is affected by the respective x coordinate (x), and produces the number (nimf) of the association function and the association value ($\alpha_{mv}(x)$),
- with the arrangement containing a minimum circuit (MIN) which takes the minimum value ($\alpha_{iv}(x)$) from each function value ($\alpha_i(x)$) and the association value ($\alpha_{mv}(x)$) which is associated with the associated x coordinate (x),
- with the arrangement containing a register (RG) which is associated with the association function (ZF) and in which the minimum value ($\alpha_{iv}(x)$) can be stored, and
- with the arrangement containing a comparison circuit (COMP) which selects the larger of the minimum value ($\alpha_{iv}(x)$) and the value stored in the associated register (RG) and causes this greater value to be stored in the register (RG) so that, once all the value pairs of the fuzzy set of input values has been evaluated, the maximum value of the minimum values which represents the result of the fuzzification is stored in the register (RG).

**2.** Arrangements according to Claim 1, in which each association function (ZF) each has an associated register (RG) in which a register is selected via the number (nimf) of the affected association function, in which a multiplier (MUX) is provided which can be set by the number of the association function such that the register association with the affected association function is actuated.

**3.** Arrangement according to Claim 1 or 2, in which the output of the fuzzifier (FFC) for the number (nimf) of the affected association function is connected to a demultiplexer (DEMUX) which connects the outputs of the registers (RG) to the input of the comparison circuit (COMP), and

in which the other input of the comparison circuit (COMP) is connected to the output of the minimum circuit (MIN) with the output of the comparison circuit being applied to the multiplexer (MUX).

**4.** Method for fuzzification of an input signal which is applied to a fuzzy circuit and is in the form of a sharp input value or a fuzzy set of input values, with the fuzzy set of input values being formed by a number of value pairs which each comprise an x coordinate (x) and an associated function value ($\alpha_i(x)$),

- in which the association function (ZF) which is affected by the respective x coordinate (x) is determined, and the number (nimf) of the association function and the association value ($\alpha_{mv}(x)$) is produced,
- in which the minimum value ($\alpha_{iv}(x)$) is taken from each function value ($\alpha_i(x)$) and the association value ($\alpha_{mv}(x)$) which is associated with the associated x coordinate (x),
- in which the maximum value is sought from the minimum values ($\alpha_{iv}(x)$),
- and in which the maximum value is emitted at the output.

**5.** Method according to Claim 4,

in which each association function (ZF) has an associated register (RG) which is in each case initially set to zero,

in which the maximum value for each input signal is determined in serial form,

in which the minimum value for an affected association function is compared with the value stored in the associated register and, in the situation where the minimum value is greater than the value in the register, this minimum value is stored in the register, and

in which this is carried out until all the values of the input signal have been investigated.

**Revendications**

**1.** Arrangement pour le traitement par logique floue d'un signal d'entrée appliqué à une entrée, lequel est présent sous la forme d'une valeur d'entrée précise ou sous la forme d'une quantité imprécise de valeurs d'entrée, la quantité imprécise de valeurs d'entrée étant constituée de plusieurs paires de valeurs qui comprennent à chaque fois une coordonnée (x) et une valeur de fonction correspondante αi (x),

- l'arrangement comprenant un élément de traitement par logique floue (FFC) qui détermine quelle fonction d'appartenance (ZF) est concernée par les coordonnées x (x) respectives et génère le numéro (nimf) de la fonction d'appartenance ainsi que la valeur d'appartenance (αmv(x)),
- l'arrangement comprenant un circuit de détection de minimum (MIN) qui extrait la valeur minimale (αiv(x)) parmi chaque valeur de fonction (αi(x)) et la valeur d'appartenance (αmv(x)) associée à la coordonnée x (x) associée,
- l'arrangement comprenant un registre (RG) associé à la fonction d'appartenance (ZF) dans lequel peut être enregistrée la valeur minimale (αiv(x)), et
- l'arrangement comprenant un circuit comparateur (COMP) qui sélectionne la plus grande parmi la valeur minimale (αiv(x)) et la valeur enregistrée dans le registre (RG) associé et commande l'enregistrement de cette valeur maximale dans le registre (RG) de manière à ce qu'après l'évaluation de toutes les paires de valeur de la quantité imprécise de valeurs d'entrée, la valeur maximale des valeurs minimales qui représente le résultat du traitement par logique floue soit enregistrée dans le registre (RG).

2. Arrangements selon la revendication 1, avec lesquels un registre (RG) est à chaque fois associé à chaque fonction d'appartenance (ZF), avec lesquels la sélection d'un registre s'effectue par le biais du numéro (nimf) de la fonction d'appartenance concernée, avec lesquels il est prévu un multiplexeur (MUX) qui peut être paramétré par le numéro de la fonction d'appartenance de manière à ce que le registre associé à la fonction d'appartenance concernée soit commandé.

3. Arrangement selon la revendication 1 ou 2, avec lequel la sortie de l'élément de traitement par logique floue (FFC) pour le numéro (nimf) de la fonction d'appartenance concernée est reliée à un démultiplexeur (DEMUX) qui relie les sorties du registre (RG) à l'entrée du circuit comparateur (COMP), avec lequel l'autre entrée du circuit comparateur (COMP) est reliée à la sortie du circuit de détection de minimum (MIN), la sortie du circuit comparateur étant appliquée au multiplexeur (MUX).

4. Procédé de traitement par logique floue d'un signal d'entrée appliqué à un circuit à logique floue, lequel est présent sous la forme d'une valeur d'entrée précise ou sous la forme d'une quantité imprécise de valeurs d'entrée, la quantité imprécise de valeurs d'entrée étant constituée de plusieurs paires de valeurs qui comprennent à chaque fois une coordonnée x (x) et une valeur de fonction correspondante αi(x),

- avec lequel la fonction d'appartenance (ZF) qui est concernée par la coordonnée x (x) correspondante est déterminée et le numéro (nimf) de la fonction d'appartenance et la valeur d'appartenance (αmv(x)) sont générées,
- avec lequel la valeur minimale (αiv(x)) est extraite parmi chaque valeur de fonction (αi(x)) et la valeur d'appartenance (αmv(x)) associée à la coordonnée x (x) associée,
- avec lequel la valeur maximale est recherchée parmi les valeurs minimales (αiv(x)),
- et avec lequel la valeur maximale est délivrée à la sortie.

5. Procédé selon la revendication 4, avec lequel un registre (RG) est associé à chaque fonction d'appartenance (ZF), lequel est à chaque fois mis à 0 au début, avec lequel la détermination de la valeur maximale pour chaque signal d'entrée est effectuée en série, avec lequel la valeur minimale pour une fonction d'appartenance concernée est comparée avec la valeur enregistrée dans le registre associé et, dans le cas où la valeur minimale est supérieure à la valeur du registre, celle-ci est enregistrée dans le registre, avec lequel celui-ci est exécuté jusqu'à ce que toutes les valeurs du signal d'entrée aient été analysées.

# FIG 1

Sensorsignale
SS

MEV

AD — ES
ai

END

MIF — x — FFUZ
αi

CONTROL

KBM

FV

# FIG 2

αi(x)
aα

MIN — αiv(x)
aα

αmv(x) / aα

COMP — GR

MUX
SEL

x
ai

FFC

RG0 — RESN

RQ
EN
en0

h0
aα

nimf / anli

DEC

RGnli — RESN

RQ
EN
enli

hnli
aα

dnimf / nli+1

hsel / aα

DEMUX
SEL

FIG 3